# EUROPEAN PATENT SPECIFICATION

(11) **EP 0 372 356 B1**
(45) Date of publication and mention of the grant of the patent: **08.02.1995**
(21) Application number: 89121904.0
(22) Date of filing: 28.11.1989
(51) Int. Cl.: G02F 1/133, G02F 1/136

(54) **Liquid crystal display device**
Flüssigkristall-Auszeigevorrichtung
Dispositif d'affichage à cristal liquide

(30) Priority: 07.12.1988 JP 310547/88
(43) Date of publication of application: 13.06.1990
(73) Proprietor: HOSIDEN CORPORATION, Yao-shi Osaka (JP)
(72) Inventor: Ukai, Yasuhiro, Kobe-shi Hyogo (JP); Sunata, Tomihisa, Nishi-ku Kobe-shi Hyogo (JP); Yukawa, Teizo, Nishi-ku Kobe-shi Hyogo (JP)
(74) Representative: Lehn, Werner, Dipl.-Ing.

(56) References cited:
- EP-A- 0 266 252
- EP-A- 0 269 123
- PATENT ABSTRACTS OF JAPAN, vol. 11, no. 19 (P-537)[2466], 20th January 1987;& JP-A-61 193 128

## Description

### BACKGROUND OF THE INVENTION

The present invention relates to an active matrix liquid crystal display device which has a wide display area and provides a clear, highly precise display image accordingly.

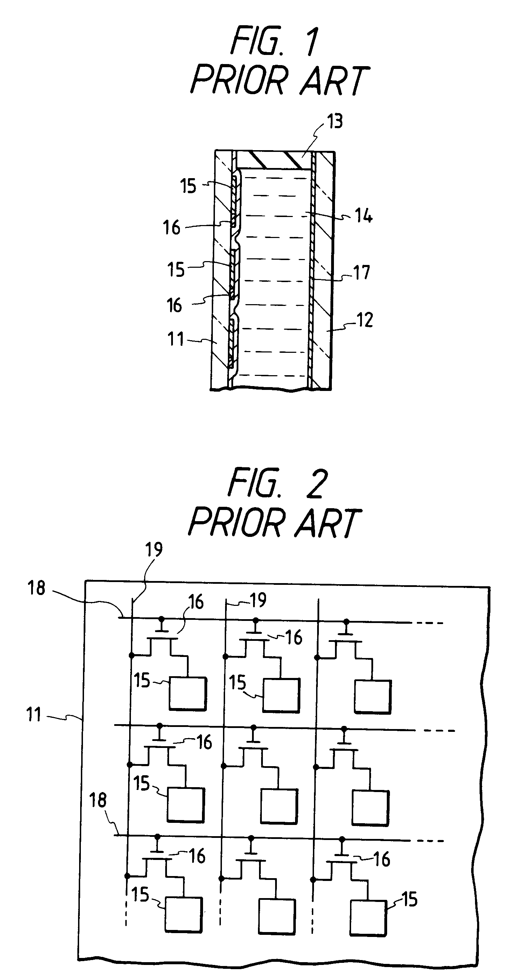

A conventional liquid crystal display device of this kind has such a construction as shown in Fig. 1, wherein a pair of opposed transparent base plates 11 and 12 as of glass are separated by a spacer 13 interposed therebetween along their marginal portions and liquid crystal 14 is sealed in the space defined by the transparent base plates 11 and 12 therebetween.

The transparent base plate 11 has on its inside a plurality of display electrodes 15 and thin film transistors 16 formed as switching elements adjacent the display electrodes 15, drains of the thin film transistors 16 being connected to the display electrodes 15, respectively.

On the inside of the other transparent base plate 12 there is formed a transparent common electrode 17 opposite the display electrodes 15.

The display electrodes 15 are, for example, pixel electrodes. As depicted in Fig. 2, on the transparent base plate 11 square display electrodes 15 are closely arranged in a matrix form and gate and source buses 18 and 19 are formed close to the display electrodes 15 and extend along them in the row and column directions, respectively.

At the intersections of the gate and source buses 18 and 19 there are disposed the thin film transistors 16, which have their gates and sources connected to the gate and source buses 18 and 19 at their intersections and have their drains connected to the display electrodes 15.

Applying voltage across a selected one of each of the gate and source buses 18 and 19, only the associated thin film transistor 16 is turned ON and charges are stored in the display electrode 15 connected to its drain, applying voltage across only that portion of the liquid crystal 14 staying between the above-mentioned display electrode 15 and the common electrode 17. By this, only the above-said portion of the liquid crystal 14 corresponding to the display electrode 15 is rendered transparent or nontransparent to light, thus providing a selective display. This display can be erased by discharging the charges stored in the above-mentioned display electrode 15.

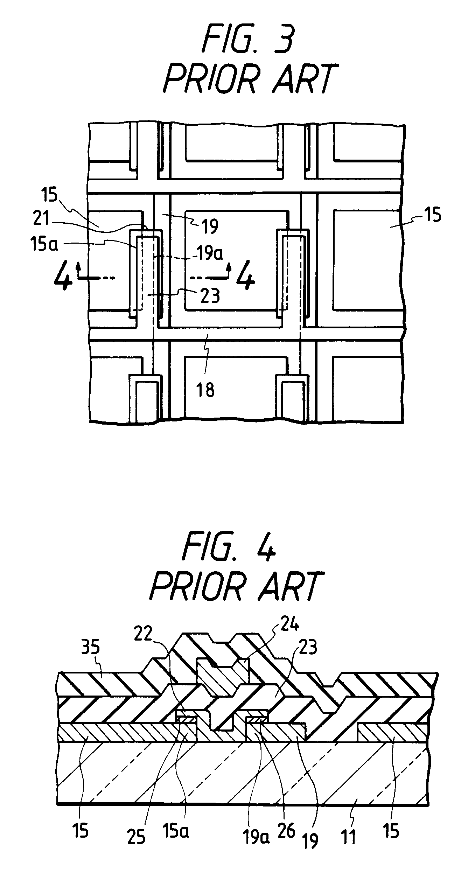

Figs. 3 and 4 show a prior art example of the thin film transistor 16. On the transparent base plate 11 the display electrode 15 and the source bus 19 are each formed by a transparent conductive film as of ITO and a semiconductor layer 22 as of amorphous silicon is formed which bridges the gap between the display electrode 15 and the source bus 19 along their parallel-opposed marginal portions 15a and 19a which act as a drain electrode and a source electrode, respectively. The semiconductor layer 22 is covered with a gate insulating film 23 as of silicon nitride.

On the gate insulating film 23 there is formed a gate electrode 24 which overlaps the semiconductor layer 22 via the gate insulating film 23. The gate electrode 24 is connected at one end to the gate bus 18.

The drain and source electrodes 15a and 16a, the semiconductor layer 22, the gate insulating film 23, and the gate electrode 24 make up the thin film transistor 16. The gate electrode 24 and the gate bus 18 are simultaneously formed of a high conductivity metal such as aluminum (Al). Further, the drain and source electrodes 15a and 19a are covered with ohmic contact layers 25 and 26, which are formed by n⁺-type semiconductor layers, for example.

With the conventional liquid crystal display device of this kind, it is necessary, for providing a high-resolution display over a wide area, that the number of display electrodes be increased. In this instance, if the size of the display screen is fixed, the source buses 19 become narrower as the number of display electrodes increases, and if the pitch of the source buses 19 is fixed, they become longer with an increase in the number of display electrodes and hence with an increase in the size of the display screen. In either case, the resistance of each source bus 19 over the entire length thereof increases and the voltage drop thereacross also increases accordingly, so that uniform brightness cannot be obtained over the entire length of the source bus 19, resulting in a brightness gradient. That is, the farther away from the drive source, the lower the brightness.

The brightness gradient could be reduced by decreasing the resistance value of the source bus 19. One possible method therefor is to increase the cross-sectional area of the source bus 19 by increasing its width. However, an increase in the width of the source bus 19 will inevitably decrease the ratio of the sum of the areas of all the display electrodes 15 to the total area of the display screen (which ratio will hereinafter be referred to as the aperture ratio), leading to the degradation of the display quality.

Another method, which overcomes the above-mentioned defect, is to deposit a high conductivity metal layer on each source bus 19 over the entire length thereof to reduce its resistance value. If aluminum which is used for the gate bus 18 is applied as well to the formation of the high conductivity metal layer, then it can be deposited on the source bus 19 simultaneously with the formation of the gate bus 18 without involving any particular step therefor. Consequently, the use of aluminum would be preferable in terms of the manufacturing process and cost.

Where the aluminum is deposited in direct contact with the ITO which forms the source bus 19, however, the subsequent annealing or similar heat treatment will allow oxygen in the ITO to combine with the aluminum in the interface therebetween, forming there an oxygen-aluminum combined layer. It has been found that the formation of the oxygen-aluminum combined layer increases the contact resistance between the ITO and aluminum layers, resulting in the resistance value of the source bus 19 becoming about the same as that of the ITO at the lowest.

Terminals of the gate buses 18 at one end are formed of ITO, partly because its contact resistance is stable and partly because they can be formed simultaneously with the formation of the display electrodes 15. Also in this instance, an oxygen-aluminum combined layer will be formed in the interface between the aluminum layer forming each gate bus 18 and the ITO layer forming the terminal as in the above case. The oxygen-aluminum combined layer increases the contact resistance between the aluminum and ITO layers, providing an equivalent circuit structure with a resistor interposed between the gate bus 18 and its terminal. Since the resistance values of these resistors are not uniform, the amplitude value of a drive signal scatters or differs with respective columns, introducing variations in the brightness of a display image.

Besides, the combination of the aluminum and the oxygen gradually proceeds in both of the gate buses 18 and the source buses 19 with the lapse of time, the conventional liquid crystal display device becomes less stable and hence cannot stand long use.

### SUMMARY OF THE INVENTION

It is therefore an object of the present invention to provide a liquid crystal display device which implements low-resistance bus structures which stably maintain their low-resistance properties for a long time.

The present invention, in common with EP-A-0 266 252, provides an active matrix type liquid crystal display device comprising liquid crystal, display electrodes formed from a transparent conductive layer and arranged in a matrix form consisting of rows and columns on a transparent base plate, source and gate buses and thin film transistors disposed at intersections of said source and gate buses, so that the display electrodes may be selectively energized, via the thin film transistors, by the selective application of voltage to the source and gate buses, said source buses each including a transparent conductive bus formed from the same transparent conductive layer as that forming said display electrodes and being adjacent to and extending along the direction of each column of said display electrodes.

The invention is characterized by
each source bus further including a metal bus formed from a high melting point metal layer, each said metal bus extending along a respective one of the transparent conductive buses, and each said metal bus and its respective transparent conductive bus being in overlapping relationship;
an insulating layer formed almost all over the surface extent of the base plate, so as to cover the transparent conductive buses and metal buses on said base plate, but having a slot-shaped window positioned by one side of each of said display electrodes and extending in the column direction, said windows exposing therethrough part of the surface of said metal bus; and
bus segments each formed by a high conductivity metal layer arranged to fill said slot-shaped window of said insulating layer so as to directly cover said exposed surface of said metal bus, each of said source buses being composed of one said transparent conductive bus, one said metal bus and one said bus segment.

According to the present invention, the high conductivity metal layer is deposited on the high melting point metal layer so that the transparent conductive layer and the high conductivity metal layer do not make direct contact with each other. Consequently, no oxygen-metal combined layer forms in the interface between the transparent conductive layer and the high conductivity metal layer, and the source bus is stably held low in resistance by the high conductivity metal layer. Accordingly, no brightness gradient will develop, even if the source bus is not formed wide. Thus the liquid crystal display device of the present invention achieves high brightness and provides a highly precise display without reducing the afore-mentioned aperture ratio.

### BRIEF DESCRIPTION OF THE DRAWINGS

Fig. 1 is a sectional view of a liquid crystal display device for explaining the prior art;
Fig. 2 is a plan view schematically showing the arrangement of display electrodes and thin film transistors in the conventional liquid crystal display device;
Fig. 3 is a plan view showing a pattern of arrangement of electrodes, thin film transistors, source buses and gate buses in the conventional liquid crystal display device;
Fig. 4 is a sectional view of the thin film transistor taken on the line 4-4 in Fig. 3;
Figs. 5A through 5D are sectional views illustrating a sequence of steps involved in the formation of source buses in a first embodiment of the present invention;
Figs. 6A through 6D are sectional views illustrating a sequence of steps involved in the formation of gate bus terminals in the first embodiment of the present invention;
Fig. 7 is a plan view for explaining the plane structure of the liquid crystal display device of the present invention;
Figs. 8A through 8D are sectional views illustrating a sequence of steps involved in the formation of source buses in a second embodiment of the present invention;
Figs. 9A through 9D are sectional views illustrating a sequence of steps involved in the formation of gate bus terminals in the second embodiment of the present invention; and
Fig. 10 is a graph for explaining the effect of the present invention.

### DESCRIPTION OF THE PREFERRED EMBODIMENTS

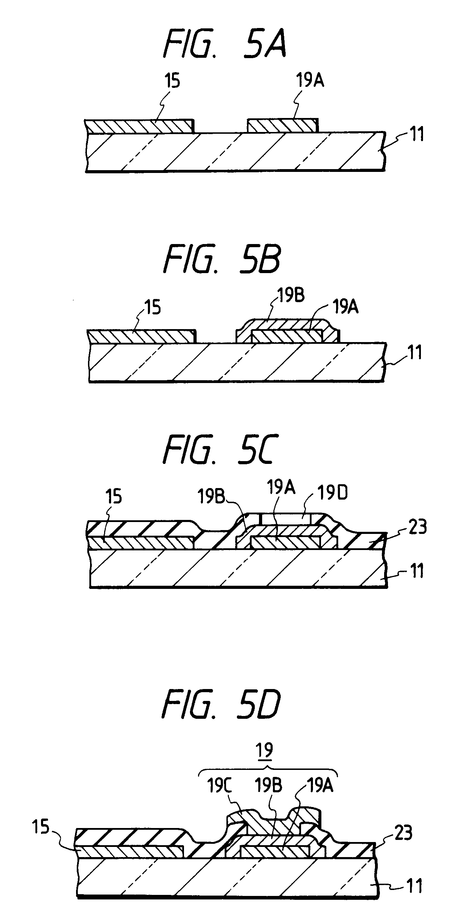

Referring first to Figs. 5A through 5D, 6A through 6D and 7, the structure of the liquid crystal display device according to a first embodiment of the present invention will be described together with its manufacturing steps.

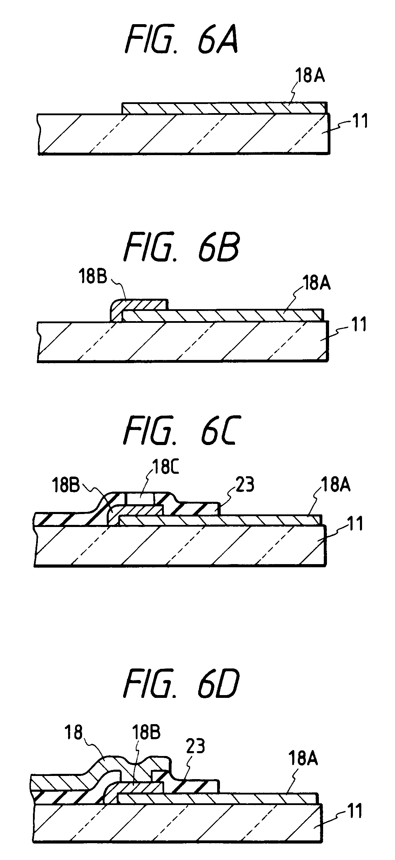

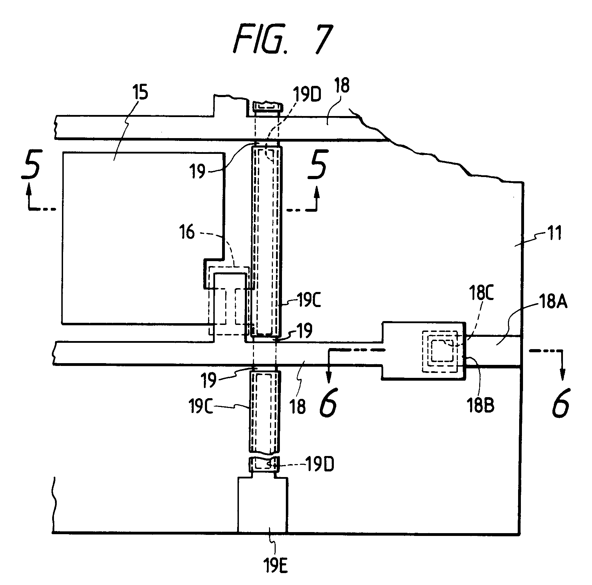

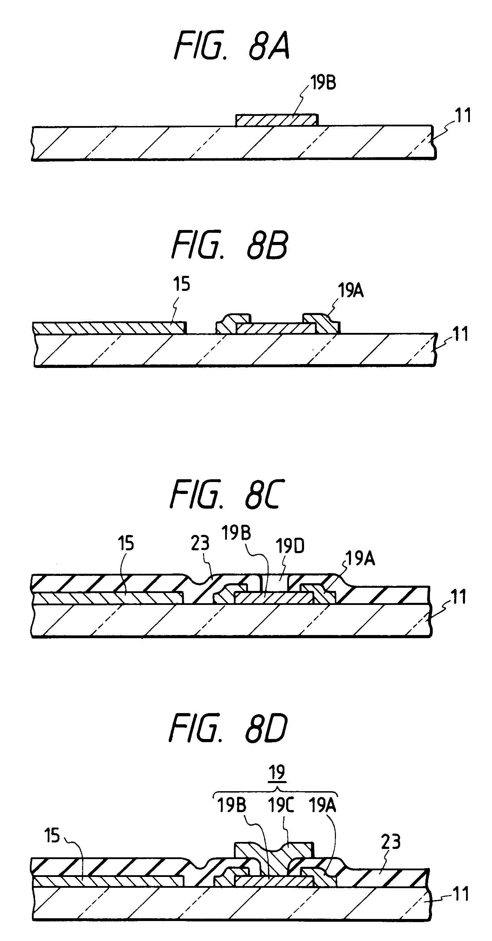

Figs. 5A through 5D are sectional views taken on the line 5-5 in Fig. 7 and Figs. 6A through 6D are sectional views taken on the line 6-6 in Fig. 7.

Fig. 7 shows the relative arrangement of the gate and source buses 18 and 19, the display electrode 15 and the thin film transistor 16.

The structural feature of the liquid crystal display device according to the first embodiment of the present invention resides in the source bus 19 depicted in Figs. 5A through 5D. The source bus 19 has a three-layer structure which comprises a transparent conductive bus 19A formed of ITO, a metal bus 19B formed by a high melting point metal layer on the transparent conductive bus 19A, and a bus segment 19C formed by a high conductivity metal layer on the metal bus 19B as shown in Fig. 5D.

Figs. 6A through 6D schematically illustrate the gate bus 18. As depicted in Fig. 6D, a gate bus terminal 18A is formed by a transparent conductive layer and a metal pad 18B is formed by a high melting point metal layer on the inner end portion of the gate bus terminal 18A. The gate bus 18 formed by a high conductivity metal layer is connected to the terminal 18A through a window 18C made in an insulating layer 23 overlying the metal pad 18B.

Next, a description will be given, with reference to Figs. 5A through 5D and 6A through 6D, of an example of the manufacturing process of the liquid crystal display device of the present invention.

The manufacture starts with the formation of the transparent conductive buses 19A of ITO on one side of the transparent base plate 11 at the position where to provide the source buses 19, as shown in Fig. 5A. In this step the display electrodes 15 and the gate bus terminals 18A are also formed of the ITO simultaneously with the formation of the transparent conductive buses 19A, as shown in Fig. 6A.

Incidentally, source bus terminals 19E (Fig. 7) are also formed by the ITO transparent conductive layer. That is, the transparent conductive buses 19A are formed to the edge of the transparent base plate 11 at one side thereof and their end portions are used as the source bus terminals 19E.

The next step consists in forming the metal buses 19B by a high melting point metal layer which covers the transparent conductive buses 19A as shown in Fig. 5B. At the same time, the metal pads 18B are formed by the high melting point metal on the inner marginal portions of the gate bus terminals 18A as depicted in Fig. 6B. The high melting point metal usable for the metal buses 19B and the metal pads 18B is chromium (Cr), for instance.

In the next step the insulating layer 23, which serves also as a gate insulating film of each thin film transistor 16, is deposited all over the transparent base plate 11, and the insulating layer 23 is selectively removed by etching or the like, leaving required portions. At the same time, the insulating layer 23 is removed, as by etching, to form therein slot-like windows 19D to expose part of each metal bus 19B which will ultimately serve as the source bus 19 and the window 18C to expose part of each metal pad 18B of the high melting point metal layer overlying the gate bus terminal 18A as shown in Figs. 5C and 6C. Each window 19D extends along one side of corresponding display electrode 15 but terminates at the intersection of the gate and source buses 18 and 19 as depicted in Fig. 7.

The selective removal of the insulating layer 23 is followed by the formation of the segment buses 19C and the gate buses 18 by the same high conductivity metal layer. The gate buses 18 are connected to the metal pads 18B of the high melting point metal layer through the windows 18C made in the insulating layer 23, and the bus segments 19C are formed on each metal bus 19B, filling the windows 19D made in the insulating layer 23.

The high conductivity metal for the bus segments 19C and the gate buses 18 is aluminum as is the case with the gate electrodes. The high conductivity metal layer is deposited by evaporation or sputtering over the entire area of the surface of the insulating layer 23 and is selectively etched away, thereby providing such structures as shown in Figs. 5D and 6D. The bus segments 19C are not formed at the intersection of the source and gate buses 19 and 18 either.

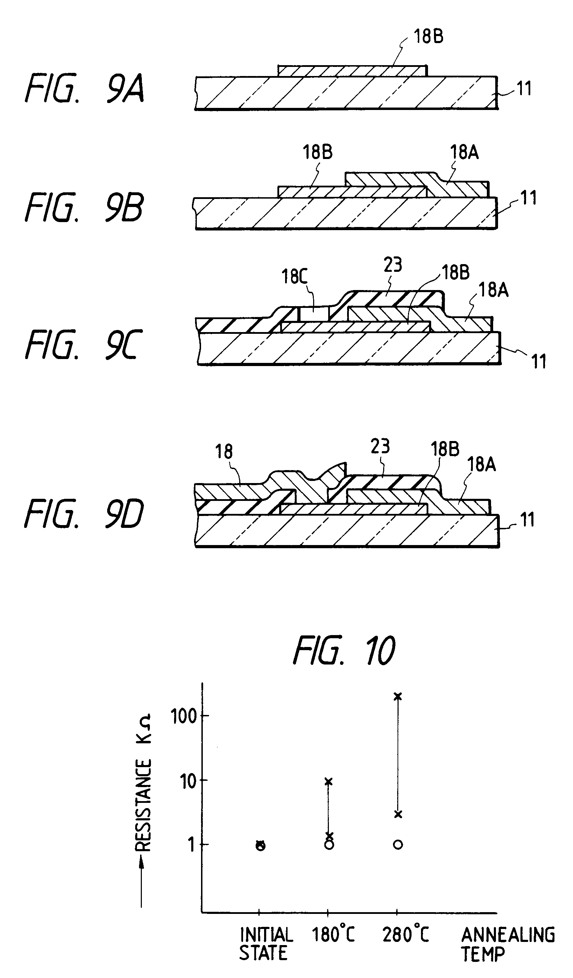

Figs. 8A through 8D and 9A through 9D illustrate a second embodiment of the present invention.

In this embodiment the manufacture begins with simultaneous formation of the metal buses 19B and the metal pads 18B of a high melting point metal on the transparent base plate 11 at positions where the source buses 19 and the gate bus terminals 18A will ultimately be provided, respectively (Figs. 8A and 9A).

Next, the display electrodes 15, the gate bus terminals 18A and the source bus terminals 19E (Fig. 7) are simultaneously formed by the same ITO transparent conductive layer. The gate bus terminals 18A and the source bus terminals 19E may also be formed of the high melting point metal, but since the electrical contact resistance of the high melting point metal layer as of chromium (Cr) is not stable, this embodiment utilizes the display electrode forming step to form the gate bus terminals 18A and the source bus terminals 19E by the transparent conductive layer.

In this embodiment two transparent conductive buses 19A are formed overlapping opposite marginal portions of each metal bus 19B of the high melting point metal deposited at the position where to form the source bus 19.

According to this method in which the transparent conductive bus 19A overlapping at least one marginal portion of each metal bus 19B, even if the metal bus 19B breaks off during formation thereof, the broken-off portion can be by-passed through the transparent conductive bus 19A. This improves the yield rate of product.

After the formation of the transparent conductive buses 19A and the gate bus terminals 18A, the insulating layer 23 is deposited substantially all over the base plate 11. The insulating layer 23 is selectively removed to form therein the windows 19D and 18C at predetermined positions on the metal buses 19B and the metal pads 18B in the same manner as described previously with regard to the first embodiment. After this, a high conductivity metal layer is deposited by evaporation or sputtering all over the surface of the insulating layer 23 and the high conductivity metal layer is selectively etched away to form the bus segments 19C for the source buses and the gate buses 18.

The bus segment 19C is not formed at the position where the source bus 19 intersects with the gate bus 18 as depicted in Fig. 7. One end portion of each gate bus 18 makes contact with the metal pad 18B through the window 18C.

As will be appreciated from the above, the structure of either embodiment of the present invention affords reduction of the resistance value of each source bus 19 by the deposition thereon of the plurality of bus segments 19C of the high conductivity metal. Thus the source bus 19 need not be widened for decreasing its resistance value, and consequently, the afore-mentioned aperture ratio is not reduced. Hence the liquid crystal display device of the present invention provides a high-brightness, high-precision display.

Moreover, each bus segment 19C is not in direct contact with the transparent conductive bus forming the source bus 19 but is connected thereto through the metal bus 19B of the high melting point metal layer. It is presumed from Fig. 10, described later, that oxygen in the ITO forming the transparent conductive layer does not easily combine with the high melting point metal in the interface between the transparent conductive layer and the high melting point metal layer. Consequently, no change is caused in the contact resistances between the bus segments 19C by the high conductivity metal layer and the metal buses 19B by the high melting point metal layer and between the metal buses 19B and the transparent conductive buses 19A, so that the contact resistances can be stably held low for a long time.

Fig. 10 shows an example of the sum of measured values of the total resistance of the source bus, i.e. the resistance over the entire length of the source bus, and the contact resistance between the source bus and the terminal of the transparent conductive bus. In the case of the structure according to the present invention, when it was annealed at 180 and 280°C, the sum of the contact resistance and the total resistance of the source bus was about 1 kΩ as indicated by circles in Fig. 10. In contrast thereto, in the case of the conventional structure composed of the aluminum and transparent conductive ITO layers, the above-mentioned sum of resistances scattered in the ranges of from 1 to 10 kΩ and from 5 to 100 kΩ as indicated by crosses when it was annealed at 180 and 280°C, respectively.

Also in each gate bus 18, the contact resistance between the gate bus terminal 18A and the gate bus 18 will not increase, because the high conductivity metal layer forming the gate bus 18 is connected through the high melting point metal pad 18B to the gate bus terminal 18A formed by the transparent conductive layer. With such a structure, the amplitude of a drive signal to the thin film transistors 16 does not largely scatter for each row or column, and hence no appreciable variations occur in brightness, thus providing a stable display of image.

Although the above embodiments have been described to use chromium (Cr) for the high melting point metal layer, it is also employed nickel (Ni), molybdenum (Mo), tantalum (Ta), a nickel-chromium (Ni-Cr) alloy, or molybdenum-tantalum (Mo-Ta) alloy for the high melting point metal layer.

## Claims

1. An active matrix type liquid crystal display device comprising liquid crystal, display electrodes (15) formed from a transparent conductive layer and arranged in a matrix form consisting of rows and columns on a transparent base plate (11), source and gate buses (19, 18) and thin film transistors (16) disposed at intersections of said source and gate buses (19, 18), so that the display electrodes (15) may be selectively energized, via the thin film transistors (16), by the selective application of voltage to the source and gate buses (19, 18), said source buses (19) each including a transparent conductive bus (19A) formed from the same transparent conductive layer as that forming said display electrodes (15) and being adjacent to and extending along the direction of each column of said display electrodes; characterized by
each source bus (19) further including a metal bus (19B), formed from a high melting point metal layer, each said metal bus (19B) extending along a respective one of the transparent conductive buses (19A), and each said metal bus (19B) and its respective transparent conductive bus (19A) being in overlapping relationship;
an insulating layer (23) formed almost all over the surface extent of the base plate, so as to cover the transparent conductive buses (19A) and metal buses (19B) on said base plate, but having a slot-shaped window (19D), positioned by one side of each of said display electrodes and extending in the column direction, said windows exposing therethrough part of the surface of said metal bus; and
bus segments (19C) each formed by a high conductivity metal layer arranged to fill said slot-shaped window (19D) of said insulating layer so as to directly cover said exposed surface of said metal bus (19B), each of said source buses (19) being composed of one said transparent conductive bus (19A), one said metal bus (19B) and one said bus segment (19C).

2. The liquid crystal display device of claim 1, wherein each said metal bus (19B) covers said transparent conductive bus (19A) substantially over the entire length thereof.

3. The liquid crystal display device of claim 2 which further includes gate bus terminals (18A) formed from the same transparent conductive layer as that of said transparent conductive buses (19A) and arranged side by side on one marginal portion of said base plate, and metal pads (18B) each formed on one of said gate bus terminals (18A) from the same high melting point metal layer as that of said metal buses (19B), and in which said insulating layer (23) further has a window (18C) formed therein at a position corresponding to each of said metal pads (18B) and said gate buses (18) are each formed on said insulating layer (23) from the same high conductivity metal layer as those of said bus segments (19C), extend along each row of said display electrodes (15), and fill said window (19D) of said insulating layer to make direct contact with said metal pad (18B) on the corresponding gate bus terminal (18A).

4. The liquid crystal device of claim 1 wherein one marginal portion of each said transparent conductive bus (19A) overlaps one marginal portion of the corresponding metal bus (19B) over the entire length thereof.

5. The liquid crystal display device of claim 4 which further includes second transparent conductive buses (19A) formed from the same transparent conductive layer as that of the first mentioned said transparent conductive buses (19A), one marginal portion of each said second transparent conductive buses overlapping the other marginal portion of said corresponding metal bus (19B), and in which said slot-shaped windows (19D) are made in said insulating layer (23) to partly expose the surface of each said metal bus (19B) between the opposed edges of said two opposed transparent conductive buses (19A).

6. The liquid crystal display device of claim 4 which further includes metal pads (18B) each corresponding to one of said gate buses (18) and formed on another marginal portion of said base plate from the same high melting point metal layer as that of said metal buses (19B) and gate bus terminals (18A) each formed from the same transparent conductive layer as that of said transparent conductive buses (19A) and overlapping one of said metal pads (18B), and in which said insulating layer (23) further has a window (18C) formed therein at a position corresponding to each of said metal pads and said gate buses are each formed on said insulating layer from the same high conductivity metal layer as those of said bus segments (19C), extend along each row of said display electrodes (15), and fill said window (18C) of said insulating layer to make direct contact with the corresponding metal pad (18B).

7. The liquid crystal display device of claim 3 or 6 wherein source bus terminals (19E), formed from the same transparent conductive layers as that of said transparent conductive buses (19A), are each connected to one end of said transparent conductive buses (19A).

8. The liquid crystal display device of claim 1, 2, 3, 4, 5, or 6 wherein said high melting point metal layer is formed of chromium (Cr).

9. The liquid crystal display device of claim 1, 2, 3, 4, 5, or 6 wherein said high conductivity metal layer is formed of aluminium (Al).

10. The liquid crystal display device of claim 1, 2, 3, 4, 5, or 6 wherein said transparent conductive layer is formed of ITO.

## Patentansprüche

1. Aktivmatrix-Flüssigkristall-Anzeigevorrichtung mit einem Flüssigkristall, Anzeigeelektroden (15), gebildet aus einer transparenten leitfähigen Schicht und angeordnet in einer Matrixform, bestehend aus Reihen und Spalten auf einer transparenten Basisplatte (11), Source- und Gatebussen (19, 18) und Dünnfilmtransistoren (16), angeordnet an den Schnittpunkten der Source- und Gatebusse (19, 18), so daß die Anzeigelektroden (15) selektiv mit Energie versorgt werden können über die Dünnfilmtransistoren (16) durch das selektive Anlegen von Spannung an die Source- und Gatebusse (19, 18), wobei die Sourcebusse (19) jeweils einen transparenten leitfähigen Bus (19A) enthalten, gebildet aus derselben transparenten leitfähigen Schicht, wie der, die die Anzeigeelektroden (15) bildet, und der benachbart ist zu und sich erstreckt entlang der Richtung jeder Spalte der Anzeigelektroden;
dadurch **gekennzeichnet**, daß
jeder Sourcebus (19) weiterhin einen Metallbus (19B) beinhaltet, gebildet aus einer Metallschicht mit hohem Schmelzpunkt, wobei sich jeder Metallbus (19B) erstreckt entlang eines jeweiligen der transparenten leitfähigen Busse (19A), und jeder Metallbus (19B) und sein jeweiliger transparenter gleitfähiger Bus (19A) in überlappender Beziehung stehen;
eine Isolierschicht (23) gebildet ist fast überall auf der Oberflächenerstreckung der Basisplatte, um somit die transparenten leitfähigen Busse (19A) und Metallbusse (19B) auf der Basisplatte zu überdecken, aber mit einem schlitzförmigen Fenster (19D), positioniert durch eine Seite von jeder der Anzeigeelektroden und sich erstreckend in der Spaltenrichtung, wobei die Fenster dadurch einen Teil der Oberfläche des Metallbusses freilegen; und
Bussegmente (19C), jeweils gebildet durch eine Hochleitfähigkeits-Metallschicht, angeordnet sind zum Füllen des schlitzförmigen Fensters (19D) der Isolierschicht, um somit direkt die freigelegte Oberfläche des Metallbusses (19B) zu bedecken, wobei jeder der Sourcebusse (19) zusammengesetzt ist aus einem transparenten leitfähigen Bus (19A), einem Metallbus (19B) und einem Bussegment (19C).

2. Flüssigkritall-Anzeigevorrichtung nach Anspruch 1, dadurch gekennzeichnet, daß jeder Metallbus (19B) den transparenten leitfähigen Bus (19A) im wesentlichen über die gesamte Länge davon überdeckt.

3. Flüssigkristall-Anzeigevorrichtung nach Anspruch 2, gekennzeichnet durch Gatebusanschlüsse (18A) gebildet aus derselben transparenten leitfähigen Schicht wie der der transparenten leitfähigen Busse (19A) und angeordnet Seite an Seite an einem Randabschnitt der Basisplatte, und Metallkissen (18B), jeweils gebildet auf einem der Gatebusanschlüsse (18A) aus derselben Metallschicht mit hohem Schmelzpunkt wie der der Metallbusse (19B), und wobei die Isolierschicht (23) weiterhin ein Fenster hat (18C) darin gebildet hat an einer Position entsprechend jedem der Metallkissen (18B) und die Gatebusse (18) jeweils gebildet sind auf der Isolierschicht (23) aus derselben Hochleitfähigkeits-Metallschicht wie der der Bussegmente (19C), sich entlang jeder Reihe der Anzeigeelektroden (15) erstrecken und das Fenster (19D) der Isolierschicht füllen, um direkten Kontakt zu machen mit dem Metallkissen (18B) auf dem entsprechenden Gatbusanschluß (18A).

4. Flüssigkristall-Anzeigevorrichtung nach Anspruch 1, dadurch gekennzeichnet, daß ein Randabschnitt von jedem transparenten leitfähigen Bus (19A) überlappt über einen Randabschnitt des entsprechenden Metallbusses (19B) über die gesamte Länge davon.

5. Flüssigkristall-Anzeigevorrichtung nach Anspruch 4, gekennzeichnet durch zweite transparente leitfähige Busse (19A), gebildet aus derselben transparenten leitfähigen Schicht wie der der ersten erwähnten transparenten leitfähigen Busse (19A), wobei ein Randabschnitt von jedem der zweiten transparenten leitfähigen Busse überlappt den anderen Randabschnitt des entsprechenden Metallbusses (19B), und wobei die schlitzförmigen Fenster (19D) hergestellt sind in der Isolierschicht (23) zum teilweisen Freilegen der Oberfläche jedes Metallbusses (19B) zwischen den gegenüberliegenden Rändern der zwei gegenüberliegenden transparenten leitfähigen Busse (19A).

6. Flüssigkristall-Anzeigevorrichtung nach Anspruch 4, gekennzeichnet durch Metallkissen (18B), jeweils entsprechend einem der Gatebusse (18) und gebildet auf einem weiteren Randabschnitt der Basisplatte auf derselben Metallschicht mit hohem Schmelzpunkt wie der Metallbusse (19B) und Gatebusanschlüsse (18A), jeweils gebildet aus derselben transparenten leitfähigen Schicht wie der der transparenten leitfähigen Busse (19A) und überlappend eines der Metallkissen (18B), und wobei die Isolierschicht (23) weiterhin ein Fenster (18C) darin gebildet hat an einer Position entsprechend jedem der Metallkissen und die Gatebusse jeweils gebildet sind auf der Isolierschicht aus derselben Hochleitfähigkeits-Metallschicht wie der der Bussegmente (19C), sich erstrecken entlang der Reihe der Anzeigeelektroden (15) und das Fenster (18C) der Isolierschicht füllen, um direkten Kontakt zu haben mit dem entsprechenden Metallkissen (18B).

7. Flüssigkristall-Anzeigevorrichtung nach Anspruch 3 oder 6, dadurch gekennzeichnet, daß Sourcebusanschlüsse (19E), gebildet aus denselben transparenten letifähigen Schichten wie der der transparenten leitfähigen busse (19A) jeweils verbunden sind mit einem Ende der transparenten leitfähigen Busse (19A).

8. Flüssigkristall-Anzeigevorrichtung nach Anspruch 1, 2, 3, 4, 5 oder 6, dadurch gekennzeichnet, daß die Metallschichten mit hohem Schmelzpunkt aus Chrom (Cr) gebildet ist.

9. Flüssigkristall-Anzeigevorrichtung nach Anspruch 1, 2, 3, 4, 5, 6, dadurch gekennzeichnet, daß die Hochleitfähigkeits-Metallschicht aus Aluminium (Al) gebildet ist.

10. Flüssigkristall-Anzeigevorrichtung nach Anspruch 1, 2, 3, 4, 5, 6, dadurch gekennzeichnet, daß die transparente leitfähige Schicht aus ITO gebildet ist.

## Revendications

1. Dispositif d'affichage à cristal liquide du type à matrice active comprenant : du cristal liquide ; des électrodes d'affichage (15) formées à partir d'une couche conductrice transparente et disposées en forme de matrice constituée de rangées et de colonnes sur une plaque de base transparente (11) ; des bus de source et de grille (19, 18) ; et des transistors à couches minces (16) disposés aux intersections desdits bus de source et de grille (19, 18), de sorte que les électrodes d'affichage (15) puissent être alimentées de manière sélective, par l'intermédiaire des transistors à couches minces (16), par l'application sélective d'une tension aux bus de source et de grille (19, 18), lesdits bus de source (19) comprenant chacun un bus conducteur transparent (19A) formé à partir de la même couche conductrice transparente que celle qui forme lesdites électrodes d'affichage (15) et étant adjacents à chacune desdites colonnes d'électrodes d'affichage et s'étendant dans la direction de celles-ci ;
caractérisé par :
le fait que chaque bus de source (19) comprend en outre un bus métallique (19B), formé à partir d'une couche de métal à haut point de fusion, chacun desdits bus métalliques (19B) s'étendant suivant le long de l'un respectif des bus conducteurs transparents (19A), et par le fait que chacun desdits bus métalliques (19B), et son bus conducteur transparent (19A) respectif, sont disposés à chevauchement ;
une couche isolante (23) formée sur presque toute l'étendue de la surface de la plaque de base de manière à recouvrir les bus conducteurs transparents (19A) et les bus métalliques (19B) sur ladite plaque de base, mais ayant une fenêtre en forme de fente (19D) placée d'un côté de chacune desdites électrodes d'affichage et s'étendant dans la direction des colonnes, lesdites fenêtres mettant à nu une partie de la surface dudit bus métallique ; et
des segments de bus (19C), formés chacun par une couche de métal à forte conductivité, agencés de manière à remplir lesdites fenêtres en forme de fente (19D) de ladite couche isolante de façon à recouvrir directement ladite surface mise à nu dudit bus métallique (19B), chacun desdits bus de source (19) étant composé de l'un desdits bus conducteurs transparents (19A), de l'un desdits bus métalliques (19B) et de l'un desdits segments de bus (19C).

2. Dispositif d'affichage à cristal liquide selon la revendication 1, dans lequel chacun desdits bus métalliques (19B) recouvre ledit bus conducteur transparent (19A) sensiblement sur toute sa longueur.

3. Dispositif d'affichage à cristal liquide selon la revendication 2, qui comprend en outre : des bornes de bus de grille (18A) formées à partir de la même couche conductrice transparente que celle desdits bus conducteurs transparents (19A) et agencées côte à côte sur une partie marginale de ladite plaque de base ; et des plages métalliques (18B) chacune formée sur l'une desdites bornes de bus de grille (18A) à partir de la même plaque de métal à haut point de fusion que celle desdits bus métalliques (19B), et dans lequel une fenêtre (18C) est en outre formée à l'intérieur ladite couche isolante (23), dans une position correspondant à chacune desdites plages métalliques (18B), et lesdits bus de grille (18) sont chacun formés sur ladite couche isolante (23) à partir de la même couche de métal à forte conductivité que celle desdits segments de bus (19C), s'étendent le long de chaque rangée desdites électrodes d'affichage (15) et remplissent lesdites fenêtres (19D) de ladite couche isolante pour réaliser un contact direct avec lesdites plages métalliques (18B) sur la borne de bus de grille (18A) correspondante.

4. Dispositif d'affichage à cristal liquide selon la revendication 1, dans lequel une partie marginale de chacun desdits bus conducteurs transparents (19A) chevauche, sur toute sa longueur, une partie marginale du bus métallique correspondant (19B).

5. Dispositif d'affichage à cristal liquide selon la revendication 4, qui comprend en outre des seconds bus conducteurs transparents (19A) formés à partir de la même couche conductrice transparente que celle des premiers mentionnés desdits bus conducteurs transparents (19A), une partie marginale de chacun desdits seconds bus conducteurs transparents chevauchant l'autre partie marginale dudit bus métallique (19B) correspondant, et dans lequel lesdites fenêtres en forme de fente (19D) sont pratiquées dans ladite couche isolante (23) pour mettre partiellement à nu la surface de chacun desdits bus métalliques (19B) entre les bords opposés desdits deux bus conducteurs transparents (19A) opposés.

6. Dispositif d'affichage à cristal liquide selon la revendication 4, qui comprend en outre des plages métalliques (18B) correspondant chacune à l'un desdits bus de grille (18) et formées sur une autre partie marginale de ladite plaque de base à partir de la même couche de métal à haut point de fusion que celle desdits bus métalliques (19B), et des bornes de bus de grille (18A) chacune formée à partir de la même couche conductrice transparente que celle desdits bus conducteurs transparents (19A) et chevauchant l'une desdites plages métalliques (18B), et dans lequel une fenêtre (18C) est en outre formée à l'intérieur de ladite couche isolante (23), dans une position correspondant à chacune desdites plages métalliques, et lesdits bus de grille sont chacun formés sur ladite couche isolante à partir de ladite même couche de métal à forte conductivité que celle desdits segments de bus (19C), s'étendent le long de chaque rangée desdites électrodes d'affichage (15), et remplissent ladite fenêtre (18C) de ladite couche isolante pour réaliser un contact direct avec ladite plage métallique (18B) correspondante.

7. Dispositif d'affichage à cristal liquide selon la revendication 3 ou 6, dans lequel des bornes de bus de source (19E), formées à partir de la même couche conductrice transparente que celle desdits bus conducteurs transparents (19A), sont chacune connectées à une extrémité desdits bus conducteurs transparents (19A).

8. Dispositif d'affichage à cristal liquide selon la revendication 1, 2, 3, 4, 5, ou 6, dans lequel ladite couche de métal à haut point de fusion est faite de chrome (Cr).

9. Dispositif d'affichage à cristal liquide selon la revendication 1, 2, 3, 4, 5, ou 6, dans lequel ladite couche de métal à forte conductivité est faite d'aluminium (Al).

10. Dispositif d'affichage à cristal liquide selon la revendication 1, 2, 3, 4, 5, ou 6, dans lequel ladite couche conductrice transparente est faite d'ITO (oxyde d'étain dopé à l'indium).
